# EUROPÄISCHE PATENTSCHRIFT

(11) **EP 1 656 537 B1**
(45) Veröffentlichungstag und Bekanntmachung des Hinweises auf die Patenterteilung: **20.10.2010**
(21) Anmeldenummer: 04741413.1
(22) Anmeldetag: 12.08.2004
(51) Int. Cl.: G01D 5/48

(54) **Positionssensor**
Position sensor
Capteur de position

(30) Priorität: 14.08.2003 DE 10337455; 25.09.2003 DE 10344628; 05.11.2003 DE 10351650
(43) Veröffentlichungstag der Anmeldung: 17.05.2006
(73) Patentinhaber: ASM Automation Sensorik Messtechnik GmbH, 85452 Moosinning (DE)
(72) Erfinder: STEINICH, Klaus, Manfred, 85604 Zorneding/Pöring (DE)
(74) Vertreter: Alber, Norbert
(86) Internationale Anmeldenummer: PCT/EP2004/009068
(87) Internationale Veröffentlichungsnummer: WO 2005/017462

(56) Entgegenhaltungen:
- DE-A- 10 164 121
- DE-A- 19 954 328
- US-A- 2 511 178
- US-A- 3 056 099
- US-A- 5 680 041

## Beschreibung

### I. Anwendungsgebiet

Die Erfindung betrifft Positionssensoren, insbesondere deren Detektoreinheit, basierend auf dem Prinzip der Laufzeitmessung von mechanisch-elastischen Impulsen in einem Wellenleiter, die außer diesem Wellenleiter ein relativ hierzu bewegliches, die mechanisch-elastische Welle erzeugendes oder detektierendes, Positionselement umfassen.

### II. Technischer Hintergrund

Der Wellenleiter besteht in der Regel aus einem Rohr, einem Draht oder einem Band, und kann auch als elektrischer Leiter dienen. Der Wellenleiter kann weiterhin in einem formgebenden, linearen oder kreisförmigen, Körper aus nichtmagnetischem Material, z. B. Kunststoff oder Metall zur Aufnahme und Lagerung des Wellenleiters angeordnet sein.

Basierend auf dem Wiedemann-Effekt erzeugt ein in den Wellenleiter eingespeister Strom bei seiner Überlagerung mit einem lateral auf den magnetostriktiven Wellenleiter gerichteten externen Magnetfeld, welches vom Positionselement, insbesondere einem Positionsmagneten herrührt, einen Torsionsimpuls einer mechanisch-elastischen Welle, der sich mit etwa 2.500 m/s - 6.000 m/s vom Ort der Entstehung, also z.B. der Position des Positionselementes, in beide Richtungen entlang des Wellenleiters ausbreitet.

An einer Stelle, üblicherweise an einem Ende des Wellenleiters, wird insbesondere der Torsionsanteil dieses mechanisch-elastischen Impulses von einer Detektoreinheit, die sich meist in fester Position bezüglich des Wellenleiters befindet, erfaßt. Die Zeitdauer zwischen der Auslösung des Erregerstromimpulses und dem Empfang des mechanischen Impulses ist dabei ein Maß für den Abstand des verschiebbaren Positionselementes, z. B. des Positionsmagneten von der Detektoreinrichtung oder auch der Spule bzw. des Elektromagneten.

Ein typischer solcher Sensor ist im US-Patent US 5,680,041 beschrieben.

Das Hauptaugenmerk der vorliegenden Erfindung liegt auf der Detektoreinrichtung. Diese umfaßt eine Detektor-Spule, die entweder um den Wellenleiter herum angeordnet ist oder als sogenannter Villary-Detektor um ein Villary-Bändchen herum angeordnet ist, welches quer, insbesondere im 90°-Winkel, vom Wellenleiter abstrebt und mit diesem so verbunden, insbesondere mechanisch fixiert, z. B. verschweißt ist, daß der entlang des Wellenleiters laufende Torsionsimpuls im Villary-Bändchen in eine longitudinale Welle transformiert wird. Eine solche longitudinale Welle staucht bzw. dehnt das Villary-Bändchen elastisch im kristallinen Bereich, und verändert daher dessen Permeabilität µ. Das Villary-Bändchen besteht zu diesem Zweck aus Material mit möglichst hoher magnetischer Permeabilität Δµᵣ, z. B. aus Nickel oder einer Nickel-Legierung.

Die ein magnetoelastisches Element, z.B. das Villary-Bändchen, durchlaufende Dichtewelle äußert sich somit in einer Spannungsänderung ΔU, die als Nutzsignal an der Detektorspule abgegriffen werden kann.

Wie ersichtlich, ist das Nutzsignal ΔU umso größer, je größer die Änderung der magnetischen Permeabilität Δµᵣ ausfällt.

Zusätzlich ist als Arbeitspunkt bzw. Arbeitsbereich ein solcher Bereich der Kurve Δµᵣ(H), also der magnetischen Permeabilität aufgetragen über der magnetischen Feldstärke, erwünscht, in dem sich die magnetischen Permeabilität Δµᵣ möglichst linear, relativ zur Ursache aber möglichst stark verändert, weshalb versucht wird, die Funktion Δµᵣ(H) in der Anstiegsflanke möglichst steil auszubilden und den Arbeitsbereich dort, im annähernd linearen Bereich, zu etablieren.

Im Stand der Technik wird zum Einstellen des Arbeitspunktes ein sogenannter Bias-Magnet in Form eines Dauermagneten in räumlicher Nähe zur Detektorspule, z.B. parallel zum Villary-Bändchen, angeordnet.

Der Arbeitspunkt der magneto-elastischen Detektoreinheit hängt neben den magnetischen Parametern des Bias-Magneten hauptsächlich von dessen Positionierung relativ zur Detektor-Spule ab.

Dies ist in mehrfacher Hinsicht nachteilig, beispielsweise beim Einsatz des Positions-Sensors an Stellen, die mechanische, insbesondere dynamischen mechanischen, Belastungen unterworfen sind oder auch thermischen Belastungen, welche die magnetischen Parameter des Bias-Magneten verändern und insbesondere dessen Alterungsprozess, die ebenfalls eine Änderung der magnetischen Parameter zur Folge haben, beschleunigen.

Zusätzlich sind alle bei der Herstellung des Bias-Magneten auftretenden Formabweichungen von der Sollform in gleicher Weise nachteilig. Gleiches gilt für die herstellungsbedingten Streuungen der magnetischen Parameter bei der Herstellung des Bias-Magneten.

Ein weiterer Nachteil bestand darin, dass bei zu starker Annäherung des Positionsmagneten an die Detektorspule der Arbeitspunkt negativ verändert wird . Bei der Detektoreinrichtung gemäß dem Stand der Technik musste daher der Wellenleiter über den Messbereich, innerhalb dessen sich der Positionsmagnet hin und her bewegen konnte, hinaus so weit verlängert werden, dass sich die Detektoreinheit mit der Detektorspule ausreichend weit vom Messbereich entfernt befand, um Störbeeinflussungen auf ein beherrschbares Maß zu reduzieren. Dadurch ergab sich jedoch immer eine Gesamtlänge des Positionssensors, die deutlich größer war als sein Messbereich.

Während in der Vergangenheit hauptsächlich die Bauformen mit dem quer vom Wellenleiter abstehenden Villary-Bändchen, welches von der Detektorspule umschlossen wurde, verbreitet waren aufgrund der dabei erzielbaren hohen Amplitude, hat dies den Nachteil eines aufwendigen Herstellungsprozesses.

In der Vergangenheit war es bereits bekannt, den Wellenleiters selbst entweder mit einem massiven Querschnitt, also als Draht, oder auch mit einem hohlen Querschnitt, also als Rohr, zu verwenden. Bei Verwendung des Wellenleiters auch als elektrischer Leiter wurde dabei die Rohrform bevorzugt, da hierdurch im Inneren des rohrförmigen elektrischen Leiters kein vom elektrischen Strom erzeugtes Magnetfeld vorhanden war.

Weiterhin ist aus der US 5 680 041 ein Positionssensor gemäß dem Oberbegriff des Anspruches 1 bekannt.

Magnetische Abschirmungen der Detektorspulen sind jedoch lediglich für magnetostriktive Torsionssensoren, nicht jedoch für die zum Zeitpunkt dieser Torsionssensoren noch nicht existierenden Positions-Sensoren bekannt, die jedoch nicht die konstruktiven Merkmale der Positions-Sensoren aufweisen, insbesondere keinen beweglichen Gebermagneten, keinen langestreckten Wellenleiter und vor allem keine Zeitpunktbestimmung einer eintreffenden magnetoelastischen Welle im Wellenleiter.

### III. Darstellung der Erfindung

### a) Technische Aufgabe

Es ist die Aufgabe der vorliegenden Erfindung, einen Positions-Sensor dieses Bauprinzips so zu vereinfachen, dass trotz deutlich geringerem Fertigungsaufwand die Funktion mit ausreichender Genauigkeit gewährleistet ist.

### b) Lösung der Aufgabe

Diese Aufgabe wird durch die Merkmale des Anspruches 1 gelöst. Vorteilhafte Ausführungsformen ergeben sich aus den Unteransprüchen.

Es hat sich wider Erwarten herausgestellt, dass bei Verwendung eines elektrisch leitfähigen Wellenleiters, der gleichzeitig als elektrischer Leiter dient, bei koaxialer Anordnung der Detektorspule direkt auf dem elektrischen Leiter und insbesondere Anordnung einer entsprechenden Abschirmung um die Detektorspule herum, insbesondere in Form eines Flussleitstückes, sich das Nutzsignal ausreichend stark von den vorhandenen Störsignalen unterscheiden lässt, insbesondere wenn die Abschirmung die Detektorspule möglichst dicht umschließt.

Dabei kann auf eine Strombeaufschlagung der Detektorspule nicht nur verzichtet werden, sondern diese wirkt sich unter Umständen sogar negativ aus, und auch auf eine Kompensation der sich nach in Betrieb setzen des Sensors verändernden Temperatur innerhalb der Detektoranordnung kann ebenfalls verzichtet werden.

Somit wird die Detektorspule in einem Endbereich koaxial auf dem drahtförmigen Wellenleiter angeordnet und - vorher oder nachher - mit der Abschirmung, insbesondere mittels eines ebenfalls zylindrischen Flussleitkörpers versehen. Nach Anschließen der Detektorspule an eine Detektorschaltung ist - nach geeigneter Lagerung des Wellenleiters - der Sensor funktionstüchtig.

Die Form und Anordnung des Flussleitkörpers relativ zur Detektorspule wird dabei so gewählt, dass der durch das Flussieltstück ermöglichte magnetische Flussweg die Windungen der Wicklungen der Detektorspule wenigstens an einer Stelle umschließt, insbesondere die gesamte Detektorspule in wenigstens einer Ebene, z. B. der axialen Ebene, umschließt. Vorzugsweise umschließt der Flussweg die Detektorspule dabei lückenlos.

Dementsprechend kann die Form des Flussleitstückes unterschiedlich ausgebildet sein:

In einer einfachen Ausführungsform übergreift ein C-förmiges Flussleitstück die koaxial auf dem Wellenleiter aufgebrachte Detektorspule so, dass das C-Teil mit seinen freien Enden beidseits der Spule mit geringem Abstand gegen den Wellenleiter gerichtet ist. Dadurch wird aus dem C-förmigen Flussleitstück und dem entsprechenden Teil des Wellenleiters über den geringen Luftspalt zwischen Wellenleiter und Flussleitstück hinweg ein magnetischer Kreis geschlossen, der den magnetischen Flussweg darstellt, welcher mittels des Flussleitstückes ermöglicht wird.

Obwohl dabei der Großteil der Detektorspule außerhalb dieses magnetischen Kreises liegt, wird die Signalqualität des von der Detektorspule gelieferten elektrischen Signals dadurch bereits stark positiv beeinflusst.

Weiter verbessern lässt sich das Ergebnis, in dem die Detektorspule in immer stärkeren Maß von dem magnetischen Flussweg eingehüllt wird, beispielsweise durch Anordnen von zwei einander gegenüberliegenden C-förmigen Flussleitstücken oder auch mehreren solcher C-förmigen Flussleitstücke über den Umfang des Wellenleiters verteilt.

Im Idealfall umschließt ein entsprechend geformter Flussleitkörper die Detektorspule - bis auf die benötigten Ein- und Auslässe - möglichst vollständig, und wird dabei in der Regel aus zwei sich ergänzenden Formkörpern bestehen.

Ebenso kann eine Verbesserung des Nutzsignals relativ zu den Störsignalen erreicht werden, wenn stattdessen und/oder ergänzend zu den vorgenannten Maßnahmen wengistens im Bereich der Detektorspule der für den Positionssensor notwendigen elektrische Rückleiter koaxial um die Detektorspule herum angeordnet wird, also insbesondere rohrförmig, jedenfalls vorzugsweise umfänglich geschlossen.

Diese Wirkung tritt besonders dann ein, wenn das Material nicht nur elektrisch leitfähig, sondern auch noch magnetisch abschirmend ist, also eine Permeabilität von µ > 1 aufweist.

### c) Ausführungsbeispiele

Ausführungsformen gemäß der Erfindung sind im Folgenden beispielhaft näher beschrieben. Es zeigen:
- Fig. 1:: Eine Prinzipdarstellung des erfindungsgemäßen Positionssensors,
- Fig. 2:: einen Querschnitt durch den Wellenleiter 3,
- Fig. 3 - 6:: weitere Bauformen des Flussleitkörpers.

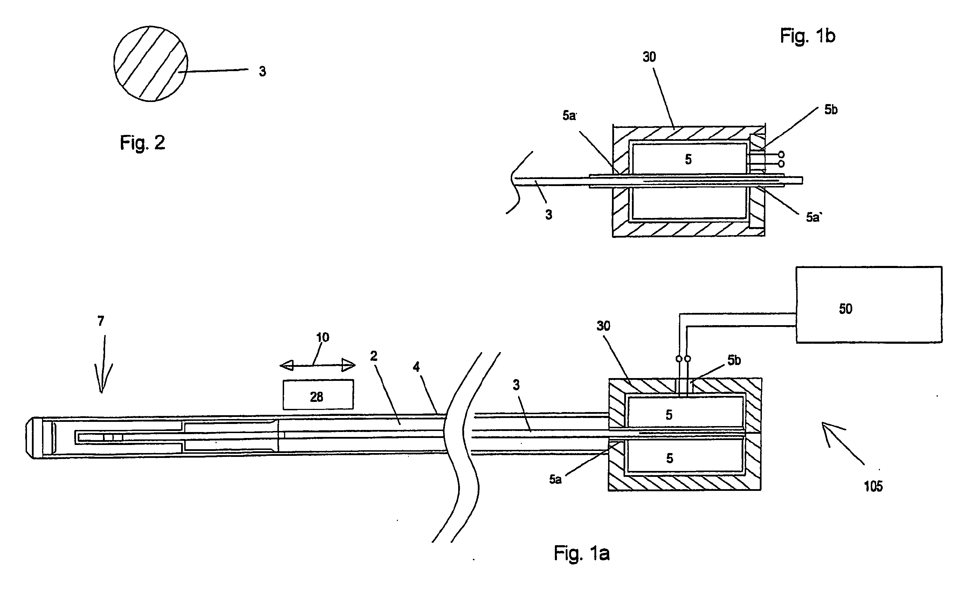

Fig. 1 zeigt den gesamten Positionssensor, bestehend aus dem in Messrichtung verlaufenden Wellenleiter 3 und auf dessen einem Ende befestigten Detektoranordnung 105 sowie der mit der Detektoranordnung 105 verbundenen Detektorschaltung 50.

Die Detektorschaltung 50 kann dabei örtlich getrennt von der Wellenleitereinheit angeordnet sein, und muss lediglich über zwei elektrische Leiter mit der Detektorspule 5 verbunden sein.

Der Positionssensor misst die Position des in Messrichtung 10 kontaktlos entlang der Wellenleitereinheit verschiebbaren Positionsmagneten 28 relativ zum Sensorkopf des Wellenleiters 3, also zur Detektorspule 5.

Der Wellenleiter 3 weist wenigstens abschnittsweise, insbesondere über seine gesamte Länge einen massiven Querschnitt von vorzugsweise kreisrunder Außenkontur auf, wie in Fig. 2 dargestellt.

In seinem Verlauf ist der Wellenleiter 3 z. B. in einem Stützrohr 4 aufgenommen, welches beispielsweise einen deutlich größeren Innendurchmesser besitzt als der Außendurchmesser des Wellenleiters 3, und in dem der Wellenleiter 3 koaxial positioniert ist durch Anordnung eines schlauchförmigen Abstandshalters 2 aus elektrisch nicht leitendem und nicht magnetischem Material, insbesondere einem Kunststoffmaterial, welches koaxial um den Wellenleiter 3 herum und innerhalb des Stützrohres 4 angeordnet ist.

Das vom Detektorkopf und damit der Detektorspule 5 abgewandte freie Ende des Wellenleiters 3 ist in einer speziellen Dämpfungsanordnung 7 aufgenommen.

Die Detektorspule 5 ist koaxial auf dem Wellenleiter 3 angeordnet, berührt diesen jedoch nicht, so dass dazwischen eine Distanzhülse aus elektrisch nicht leitendem Material angeordnet ist.

Bei der Detektorspule 5 können die Wicklungen in Ebenen quer zur Längsrichtung 10 angeordnet sein, oder auch - bei Ausbildung der Detektorspule 5 als Toroid-Spule - in Ebenen entlang der Längsrichtung 10.

Der Wellenleiter 3 kann nur auf einer Stirnseite die Detektorspule 5 verlassen, wie in der Fig. 1a dargestellt, oder die Detektorspule 5 auch in Längsrichtung komplett durchdringen, wie in Fig. 1 b dargestellt.

Abhängig davon weist der Flussleitkörper 30 nur eine einzige oder zwei gegenüberliegende stirnseitige Öffnungen 5a, 5a' für das Ein- und ggf. auch Austreten des Wellenleiters 3 und ggf. dessen Isolierhülse gegenüber der Detektorspule 5 auf, und darüber hinaus wenigstens eine Öffnung 5b zum Hindurchführen der elektrischen Anschlüsse von der Detektorspule 5 zur Auswerteschaltung 50.

Dabei kann der Flussleitkörper 30 - wie in Fig. 1a dargestellt - aus zwei Halbschalen mit Trennebene parallel zur Längsrichtung 10 bestehen oder auch aus einem topfförmigen Gehäuse mit stimseitigem Abschlussdeckel, wie in der Fig. 1b dargestellt.

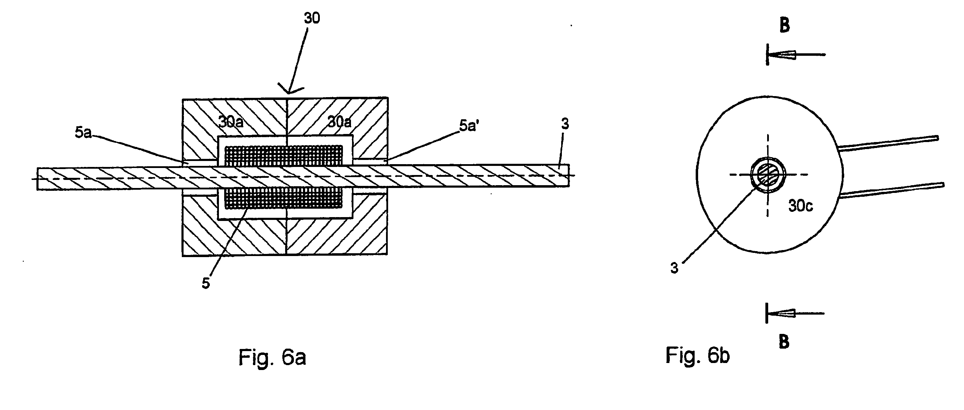

Auch eine Bauform aus zwei mit der offenen Seite gegeneinander gerichteten schalenförmigen Flussleitkörpern 30c, wie in Fig. 6 im Längsschnitt und in einer Stirnansicht dargestellt ist möglich, in der der Wellenleiter die schalenförmigen Teile 30c durch zentrale Wellenleiter-Öffnungen 5a bzw. 5a' in den ansonsten geschlossenen Boden der schalenförmigen Teile durchdringt, während die elektrischen Anschlüsse der Spule 5 durch wenigstens eine hier nicht zeichenbare Öffnung vorzugsweise auf die Berührungsebene der beiden schalenförmigen Teile 30c den Innenraum des Flussleitkörper verlassen.

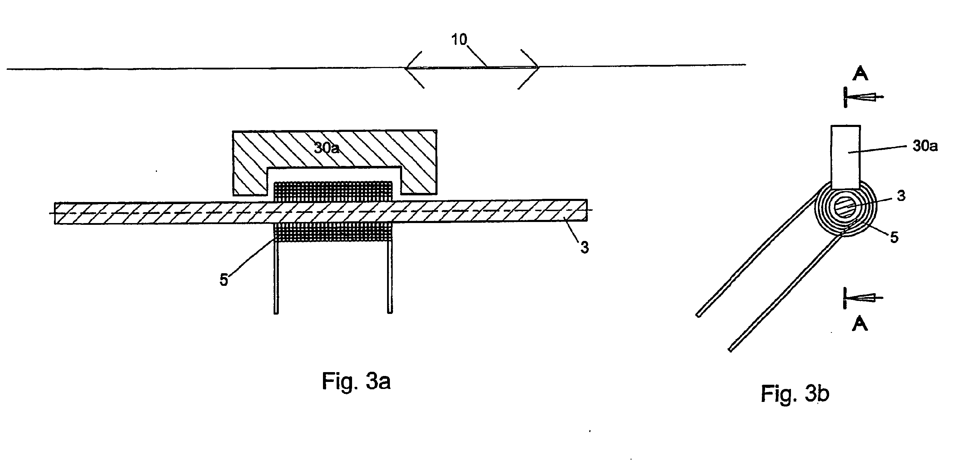

Im Gegensatz zu den vorbeschriebenen Varianten, in denen der Flussleitkörper 30 die Detektorspule 5 bis auf die benötigten Durchtrittsöffnungen für elektrische Anschlüsse und den Wellenleiter 3 weitestgehend vollständig umschließt, zeigen die Fig. 3 - 5 jeweils in Seitenansicht und Stirnansicht Lösungen, bei denen der Flussleitkörper aus einem oder mehreren C-förmigen Flussleitstücken 30a bzw. 30b besteht, die somit die Detektorspule 5 nicht vollständig einschließen.

In der einfachsten Lösung gemäß Fig. 3 ist ein solches C-förmiges Flussleitstück 30a mit seinem verbindenden Längsschenkel in Längsrichtung 10 ausgerichtet, also parallel zum Wellenleiter 3, so dass die beiden freien Enden des C-Teiles 30a beidseits der stirnseitigen Enden der Detektorspule 5 gegen den Wellenleiter 3 gerichtet sind, mit einem möglichst geringem Luftspalt zwischen dem Wellenleiter 3 und dem C-förmigen Flussleitstück 30a.

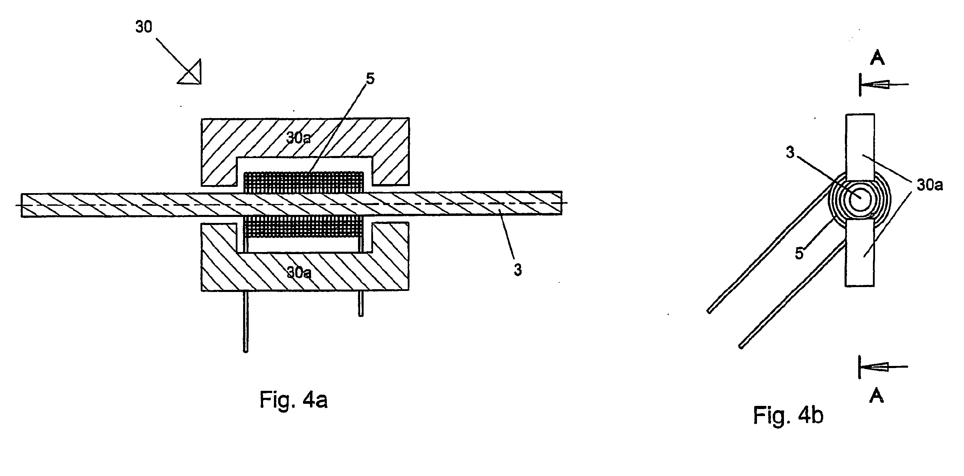

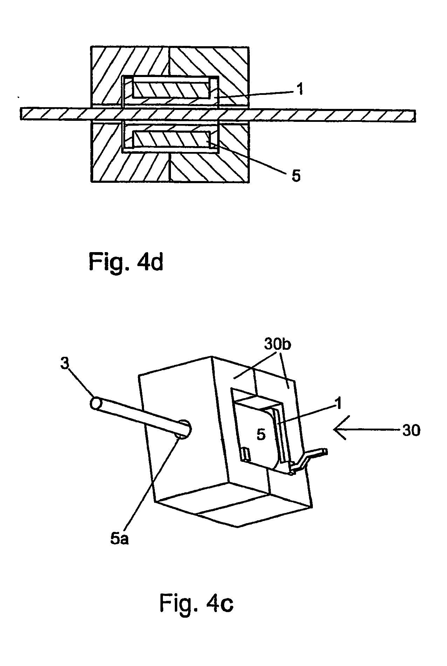

Gemäß den Fig. 4 sind zwei solcher C-Teile 30a auf einander gegenüberliegenden Seiten des Wellenleiters 3 gegeneinander gerichtet entsprechend angeordnet, so dass hierdurch bereits die gesamte Detektorspule 5 innerhalb des Flussleitstückes 30 liegt, jedoch von diesem wiederum nicht vollständig dicht eingeschlossen wird.

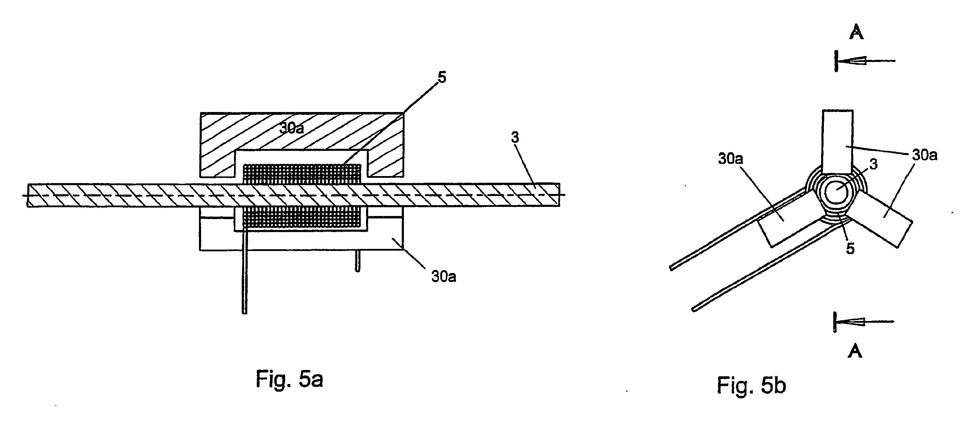

Durch steigende Anzahl von über den Umfang verteilt angeordneten solchen C-Teilen 30a, beispielsweise drei C-Teile 30a wie in den Fig. 5 dargestellt, oder einer höheren Anzahl von C-Teilen, werden die nicht von Flussleitstücken abgedeckten Umfangsbereiche der Detektorspule 5 immer geringer und damit die Qualität des von der Detektorspule 5 gelieferten Signals immer besser.

Fig. 4c zeigt eine Abwandlung zweier C-förmiger Flussleitstücke 30b, die in diesem Fall nicht jeweils auf einer der beiden Seiten des Wellenleiters angeordnet sind, sondern die beide auf den Wellenleiter 3 aufgefädelt sind mittels in dem verbindenden Schenkel der C-Teile 30b vorhandener Wellenleiter-Öffnungen 5a, während die frei endenden Schenkel der Flussleitstücke gegeneinander gerichtet sind und sich auch gegenseitig berühren sollen.

In der Seitenansicht gemäß Fig. 4d dieser Lösung ist zu erkennen, dass die Detektorspule 5 auf in der Seitenansicht oder auch im Querschnitt z. B. H-förmigen Spulengrundkörper 1 aufgewickelt sein kann, an Stelle der in den übrigen Zeichnungen dargestellten Grundkörper-freien, selbsttragenden, Detektorspulen 5.

Fig. 4c zeigt in der perspektivischen Ansicht die zu den zwei gegenüberliegenden Seiten hin offenen, nicht vom Flussleitkörper 30 abgedeckten Seiten einer solchen Detektorspule 5, aus denen die entsprechenden Anschlüsse für die Detektorspule 5 herausgeführt werden können.

Darüber hinaus gibt es eine Anordnung, bei der die ebenfalls koaxial auf dem Wellenleiter 3 angeordnete Detektorspule 5 nicht von einem Flussleitkörper sondern von einem koaxial um die Detektorspule 5 herum angeordneten, rohrförmigen elektrischen Rückleiter 6 umgeben ist. Diese Wirkung tritt besonders dann ein, wenn dessen Material nicht nur elektrisch leitfähig, sondern auch noch magnetisch abschirmend ist, also eine Permeabilität von µ > 1 aufweist.

Auch hierdurch werden von außen auf die Detektorspule 5 einwirkende Magnetfelder abgehalten.

Auch eine Kombination beider Möglichkeiten, also die Anordnung eines Flussleitkörpers zusätzlich zu einem koaxialen Rückleiter 6 mit den beschriebenen Eigenschaften, ist möglich.

### BEZUGSZEICHENLISTE

- 1: Grundkörper
- 2: Stützschlauch
- 3: Wellenleiter
- 4: Stützrohr
- 5: Detektorspule
- 5a, 5a': Wellenleiter-Öffnung
- 5b: Anschluss-Öffnung
- 6: Rückleiter
- 7: Dämpfungsanordnung
- 10: Längsrichtung
- 28: Positionsmagnet
- 30: Flussleitkörper
- 30a: C-förmiges Flussleitstück
- 30b: C-förmiges Flussleitstück
- 30c: schalenförmiges Flussleitstücke
- 50: Auswerteschaltung
- 105: Detektoranordnung

## Patentansprüche

1. Positions-Sensor nach dem Laufzeitprinzip einer mechanisch-elastischen Welle mit
- einem Wellenleiter (3), der aus elektrisch leitendem Material besteht und einen massiven Querschnitt besitzt,
- einer am Wellenleiter (3) angeordneten Detektorspule (5), die im Detektorbereich koaxial auf dem Wellenleiter (3) angeordnet ist und
- einem Positionselement, z. B. einem Positionsmagneten (28), welcher entlang des Wellenleiters (3) bewegbar ist, wobei
- wenigstens im axialen Bereich der Detektorspule (5) der Rückleiter (6) koaxial
außen um die Detektorspule (5) herum angeordnet ist,
**dadurch gekennzeichnet, dass**
- der Detektorspule (5) ein Flussleitkörper (30) zur Abschirmung zugeordnet ist,
- der Flussleitkörper (30) die Detektorspule (5) bis auf die Öffnung (5a) für den Wellenleiter (3) sowie eine Leiteröffnung (5b) für die an die Detektorspule (5) angeschlossenen elektrischen Leiter vollständig umschließt.

2. Positionssensor nach einem der vorhergehenden Ansprüche,
**dadurch gekennzeichnet, dass**
der Querschnitt des Wellenleiters (3) insbesondere über den gesamten Messbereich massiv ist.

3. Positionssensor nach einem der vorhergehenden Ansprüche,
**dadurch gekennzeichnet, dass**
die Detektorspule (5) ebenso wie eine Detektorschaltung (50) Teil einer Detektoranordnung (105) ist.

4. Positionssensor nach einem der vorhergehenden Ansprüche,
**dadurch gekennzeichnet, dass**
der Flussleitkörper (30) der Detektorspule (5) so zugeordnet ist, dass er gleichzeitig die Detektorspule (5) gegen unerwünschte äußere Magnetfelder abschirmt.

5. Positionssensor nach einem der vorhergehenden Ansprüche,
**dadurch gekennzeichnet, dass**
der magnetische Flussweg des durch den Flussleitkörper (30) ermöglichten magnetischen Flusses die Windungen der Spule wenigstens einmal einschließt, insbesondere unter Einbeziehung des Wellenleiters (3) in den Flussweg.

6. Positionssensor nach einem der vorhergehenden Ansprüche,
**dadurch gekennzeichnet, dass**
der durch den Flussleitkörper (30) ermöglichte Flussweg die gesamte Spule umgibt, insbesondere in wenigstens einer Ebene, insbesondere wenigstens einer Axialebene, insbesondere die Spule vollständig umgibt.

7. Positionssensor nach einem der vorhergehenden Ansprüche
**dadurch gekennzeichnet, dass**
der Rückleiter (6) aus elektrisch leitfähigem sowie insbesondere auch magnetisch abschirmendem Material mit einer Permeabilität von µ>1 besteht.

8. Positionssensor nach einem der vorhergehenden Ansprüche,
**dadurch gekennzeichnet, dass**
der Rückleiter (6) einen umfänglich weitestgehend, insbesondere vollständig, geschlossenen Querschnitt aufweist.

9. Positionssensor nach einem der vorhergehenden Ansprüche,
**dadurch gekennzeichnet, dass**
eine Abschirmung, insbesondere der Flussleitkörper (30), die Detektorspule (5) wenigstens teilweise, insbesondere entlang einer Ebene, insbesondere einer Axialebene der Detektorspule (5) umgibt, insbesondere koaxial umgibt.

10. Positionssensor nach einem der vorhergehenden Ansprüche,
**dadurch gekennzeichnet, dass**
die Detektorspule (5) als selbsttragende Spule ohne Spulenkörper ausgebildet ist.

11. Positionssensor nach einem der vorhergehenden Ansprüche,
**dadurch gekennzeichnet, dass**
die Detektorspule (5) auf einem Spulenkörper, insbesondere einem im Längsschnitt H-förmigen Spulenkörper gewickelt ist.

12. Positions-Sensor nach einem der vorhergehenden Ansprüche,
**dadurch gekennzeichnet, dass**
der Flussleitkörper (30c) im Wesentlichen schalenförmig, insbesondere zylindrisch geformt ist mit zwei einander in den geschlossenen Stirnseiten gegenüberliegenden Öffnungen (5a, 5a') für Ein- und Austritt des Wellenleiters (3) und einer Leiteröffnung (5b) zum Durchtritt der elektrischen Leiter zur Detektor-Spule (5) hin, wobei sich die Leiteröffnung (5b) insbesondere in der zylindrischen Mantelfläche des Flussleitkörpers (30) befindet.

13. Positions-Sensor nach einem der vorhergehenden Ansprüche,
**dadurch gekennzeichnet, dass**
der zylindrische Flussleitkörper (30) aus einem topfförmigen Korpus mit einer offenen Stirnseite und einem auf dieser stirnseitigen Öffnung passenden Deckel besteht.

14. Positions-Sensor nach einem der vorhergehenden Ansprüche,
**dadurch gekennzeichnet, dass**
das zylindrische Gehäuse aus zwei halbzylindrischen Schalen besteht.

15. Positionssensor nach einem der vorhergehenden Ansprüche,
**dadurch gekennzeichnet, dass**
das Flussleitstück (30) aus einem ferromagnetischen Material mit einer Permeabilität von µ >10, insbesondere µ > 1.000, insbesondere µ > 10.000 besteht.

16. Positionssensor nach einem der vorhergehenden Ansprüche,
**dadurch gekennzeichnet, dass**
das Flussleitstück (30) aus einer hochpermeablen Legierung, insbesondere aus Ferrit, besteht.

17. Positionssensor nach einem der vorhergehenden Ansprüche,
**dadurch gekennzeichnet, dass**
der Wellenleiter (3) von Gleichstrom durchflossen ist.

18. Positionssensor nach einem der vorhergehenden Ansprüche,
**dadurch gekennzeichnet, dass**
die Detektoranordnung (105) keinen Magneten, insbesondere keine Biasmagneten, umfasst.

19. Positionssensor nach einem der vorhergehenden Ansprüche,
**dadurch gekennzeichnet, dass**
die Axialrichtung der Detektorspule (5) mit der Längsrichtung des Wellenleiters (3) übereinstimmt.

20. Positions-Sensor nach einem der vorhergehenden Ansprüche, **dadurch gekennzeichnet, dass** die Detektor-Spule (5) eine Toroid-Spule ist.

21. Positions-Sensor nach einem der vorhergehenden Ansprüche,
**dadurch gekennzeichnet, dass**
axiale Länge der Toroid-Spule mindestens dem Durchmessers ihres freien zentralen Durchganges (5a) entspricht, vorzugsweise mindestens doppelt so groß ist.

22. Positions-Sensor nach einem der vorhergehenden Ansprüche,
**dadurch gekennzeichnet, dass**
die Toroid-Spule von einem Flussleitkörper (30) umgeben ist, der eine etwa zylindrische Form besitzt und vorzugsweise aus zwei Halbschalen besteht, die auf jeweils einer Stirnseite geschlossen sind bis auf eine zentrale Durchgangsöffnung (5a) analog zur Durchgangsöffnung der Toroid-Spule und deren Kontaktebene quer zur Längsachse der Toroid-Spule und des Flussleitkörpers (30) verläuft.

## Claims

1. A position sensor according to the runtime principle of a mechanical-elastic wave comprising:
- a wave conductor (3) made from electrically conductive material and comprising a solid cross section;
- a detector coil (5) disposed at the wave conductor (3), wherein the detector coil is disposed in the detector portion on the wave conductor (3) in coaxial manner; and
- a position element, e.g. a position magnet (28) which is moveable along the wave conductor (3), wherein
- the back conductor (6) is disposed coaxially outside about the detector coil (5) at least in the axial portion of the detector coil (5), wherein
- a flux conductor body (30) is associated with the detector coil (5) for shielding;
and
- the flux conductor body (30) completely encloses the detector coil (5) besides an opening (5a) for the wave conductor (3) and a conductor opening (5b) for the electrical conductors connected to the detector coil (5).

2. A position sensor according to one of the preceding claims, wherein the cross section of the wave conductor (3) is solid, in particular over the entire measurement portion.

3. A position sensor according to one of the preceding claims, wherein the detector coil (5) as well as a detector circuit (50) are configured as portions of a detector assembly (105).

4. A position sensor according to one of the preceding claims, wherein the flux conductor body (30) is associated with the detector coil (5), so that it simultaneously shields the detector coil (5) against undesirable external magnetic fields.

5. A position sensor according to one of the preceding claims, wherein the magnetic flux path of the magnetic flux facilitated by the flux conductor body (30) encloses the windings of the coil at least once, in particular through integrating the wave conductor (3) into the flux path.

6. A position sensor according to one of the preceding claims, wherein the flux path facilitated by the flux conductor body (30) envelops the entire coil, in particular at least in one plane, in particular at least in one axial plane, in particular completely envelops the coil.

7. A position sensor according to one of the preceding claims, wherein the back conductor (6) is made from electrically conductive material and in particular also magnetically shielding material with a permeability of µ>1.

8. A position sensor according to one of the preceding claims, wherein the back conductor (6) comprises a circumferentially substantially closed cross section, in particular a circumferentially completely closed cross section.

9. A position sensor according to one of the preceding claims, wherein a shielding, in particular the flux conductor body (30) at least partially envelops the detector coil (5), in particular along a plane, in particular an axial plane of the detector coil (5), in particular in a coaxial manner.

10. A position sensor according to one of the preceding claims, wherein the detector coil (5) is configured as a self supporting coil without a coil body.

11. A position sensor according to one of the preceding claims, wherein the detector coil (5) is wound onto a coil body, in particular a coil body that is H-shaped in cross section.

12. A position sensor according to one of the preceding claims, wherein the flux conductor body (30c) is configured essentially shell shaped, in particular cylindrical with two openings (5a, 5a') configured opposite to one another in the closed faces for entry and exit of the wave conductor (3) and a conductor opening (5b) for passing the electrical conductor to the detector coil (5), wherein the conductor opening (5b) is disposed in particular in the cylindrical enveloping surface of the flux conductor (30).

13. A position sensor according to one of the preceding claims, wherein the cylindrical flux conductor body (30) is made from a pot shaped body with an open face and a cover configured to fit this face opening.

14. A position sensor according to one of the preceding claims, wherein the cylindrical housing is made from two semi-cylindrical shells.

15. A position sensor according to one of the preceding claims, wherein the flux conductor body (30) is made from a ferromagnetic material with a permeability of µ>10, in particular µ>1,000, in particular µ>10,000.

16. A position sensor according to one of the preceding claims, wherein the flux conductor body (30) is made from a highly permeable alloy, in particular ferrite.

17. A position sensor according to one of the preceding claims, wherein the wave conductor (3) is flowed through by direct current.

18. A position sensor according to one of the preceding claims, wherein the detector assembly (105) does not comprise a magnet, in particular no bias magnets.

19. A position sensor according to one of the preceding claims, wherein the axial direction of the detector coil (5) corresponds to the longitudinal direction of the wave conductor (3).

20. A position sensor according to one of the preceding claims, wherein
the detector coil (5) is a toroid coil.

21. A position sensor according to one of the preceding claims, wherein the axial length of the toroid coil corresponds at least to the diameter of its free central opening (5a), preferably it is at least twice as big.

22. A position sensor according to one of the preceding claims, wherein the toroid coil is enveloped by a flux conductor body (30), comprising a substantially cylindrical shape and preferably comprising two half shells, each of them closed at a respective face besides a central pass through opening (5a) analogous to the pass through opening of the toroid coil and whose contact plane extends transversal to the longitudinal axis of the toroid coil and of the flux conductor body (30).

## Revendications

1. Capteur de position selon le principe de propagation d'une onde élastique mécanique avec
- un guide d'onde (3) qui se compose d'un matériau électriquement conducteur et présente une section transversale massive,
- une bobine détectrice (5) disposée sur le guide d'onde (3), et coaxialement dans la zone de détecteur sur le guide d'onde (3) et
- un élément de position, par exemple un aimant de position (28) qui est mobile le long du guide d'onde (3),
- au moins dans la zone axiale de la bobine détectrice (5), le guide de retour (6) étant disposé coaxialement à l'extérieur autour de la bobine détectrice (5),
**caractérisé en ce que**
- la bobine détectrice (5) est associée à un corps liquide (30) pour faire écran,
- le corps liquide (30) entoure complètement la bobine détectrice (5) jusqu'à une ouverture (5a) pour le guide d'onde (3) ainsi qu'une ouverture de guide (5b) pour le guide électrique raccordé à la bobine détectrice (5).

2. Capteur de position selon l'une des revendications précédentes, **caractérisé en ce que** la section transversale du guide d'onde (3) est massive en particulier sur l'ensemble de la zone de mesure.

3. Capteur de position selon l'une des revendications précédentes, **caractérisé en ce que** la bobine détectrice (5) ainsi qu'un circuit détecteur (50) fait partie d'un dispositif détecteur (105).

4. Capteur de position selon l'une des revendications précédentes, **caractérisé en ce que** le corps liquide (30) est associé à la bobine détectrice (5) de sorte qu'il protège en même temps la bobine détectrice (5) contre des champs magnétiques externes non souhaités.

5. Capteur de position selon l'une des revendications précédentes, **caractérisé en ce que** le trajet du flux magnétique permis par le corps liquide (30) entoure au moins une fois les spires de la bobine, en particulier en incorporant le guide d'onde (3) dans le trajet du flux.

6. Capteur de position selon l'une des revendications précédentes, **caractérisé en ce que** le trajet du flux magnétique permis par le corps liquide (30) entoure l'ensemble de la bobine en particulier au moins dans un plan en particulier, au moins dans un plan axial en particulier entièrement la bobine.

7. Capteur de position selon l'une des revendications précédentes, **caractérisé en ce que** le guide de retour (6) se compose d'un matériau électriquement conducteur ainsi qu'en particulier faisant écran magnétiquement avec une perméabilité de µ>1.

8. Capteur de position selon l'une des revendications précédentes, **caractérisé en ce que** le guide de retour (6) présente une section transversale fermée le plus possible sur la périphérie, en particulier complètement.

9. Capteur de position selon l'une des revendications précédentes, **caractérisé en ce qu'**un écran, en particulier le corps liquide (30), entoure la bobine détectrice (5) au moins partiellement, en particulier le long d'un plan, en particulier d'un plan axial de la bobine détectrice (5), en particulier coaxialement.

10. Capteur de position selon l'une des revendications précédentes, **caractérisé en ce que** la bobine détectrice (5) est conçue comme une bobine autoportante sans corps de bobine.

11. Capteur de position selon l'une des revendications précédentes, **caractérisé en ce que** la bobine détectrice (5) est enroulée sur un corps de bobine, en particulier sur un corps de bobine dont la coupe longitudinale est en forme de H.

12. Capteur de position selon l'une des revendications précédentes, **caractérisé en ce que** le corps de liquide (30c) est formé sensiblement en forme de coque, en particulier cylindrique avec deux ouverture (5a, 5a') mutuellement opposées dans les faces frontales fermées pour l'entrée et la sortie du guide d'onde (3) et une ouverture de guide (5b) pour le passage des guides conducteurs électriques à la bobine détectrice (5), l'ouverture de guide (5b) se trouvant en particulier dans la surface d'enveloppe cylindrique du corps liquide (30).

13. Capteur de position selon l'une des revendications précédentes, **caractérisé en ce que** le corps liquide cylindrique (30) se compose d'un corps en forme de pot avec une face avant ouverte et un couvercle passant sur l'ouverture en face avant.

14. Capteur de position selon l'une des revendications précédentes, **caractérisé en ce que** le boitier cylindrique se compose de deux coques semi-cylindriques.

15. Capteur de position selon l'une des revendications précédentes, **caractérisé en ce que** la pièce conductrice de flux (30) se compose d'un matériau ferromagnétique avec une perméabilité de µ>10, en particulier µ>1.000, en particulier p > 10.000.

16. Capteur de position selon l'une des revendications précédentes, **caractérisé en ce que** la pièce conductrice de flux (30) se compose d'un alliage hautement perméable, en particulier la ferrite.

17. Capteur de position selon l'une des revendications précédentes, **caractérisé en ce que** le guide d'onde (3) est traversé par du courant continu.

18. Capteur de position selon l'une des revendications précédentes, **caractérisé en ce que** le dispositif détecteur (105) ne comprend aucun aimant, en particulier aucun aimant de polarisation.

19. Capteur de position selon l'une des revendications précédentes, **caractérisé en ce que** la direction axiale de la bobine détectrice (5) coricide avec la direction longitudinale du guide d'onde (3).

20. Capteur de position selon l'une des revendications précédentes, **caractérisé en ce que** la bobine détectrice (5) est une bobine toroïdale.

21. Capteur de position selon l'une des revendications précédentes, **caractérisé en ce que** la longueur axiale de la bobine toroïdale correspond au moins au diamètre de son passage central libre (5a), de préférence au moins deux fois plus grande.

22. Capteur de position selon l'une des revendications précédentes, **caractérisé en ce que** la bobine toroïdale est entouré par un corps liquide (30) qui possède une forme environ cylindrique et des compose de préférence de deux demi-coques qui sont fermées respectivement sur une face frontale jusqu'à une ouverture centrale de passage (5a) analogue à l'ouverture de passage de la bobine toroïdale et de son plan de contact transversalement à l'axe longitudinal de la bobine toroïdale et du corps liquide (30).
